# EUROPEAN PATENT APPLICATION

(11) **EP 2 362 005 A1**
(43) Date of publication of application: **31.08.2011**
(21) Application number: 11250175.4
(22) Date of filing: 15.02.2011
(51) Int. Cl.: C25B 1/12, C25B 9/10, C25B 13/08

(54) **High-differential-pressure water electrolysis cell and method of operation**

(30) Priority: 15.02.2010 US 304694 P; 19.03.2010 US 727638
(71) Applicant: Hamilton Sundstrand Corporation, Windsor Locks, CT 06096-1010 (US)
(72) Inventor: Cipollini, Ned E., East Windsor, CT 06088 (US); Roy, Robert J., West Springfield, MA 01089 (US); Eldridge, Christopher, Manchester, CT 06042 (US)
(74) Representative: Tomlinson, Kerry John

(57) **Abstract**

An electrolysis cell (10) includes an anode (12), a cathode (16) and a high-differential-pressure water electrolysis bilayer membrane (20) disposed between the anode (12) and the cathode (16). The high-differential-pressure bilayer membrane (20) includes a platinum-impregnated ion-exchange membrane layer (24) and an untreated ion-exchange membrane layer (22). The untreated ion-exchange membrane layer (22) is disposed between the anode (12) and the platinum-impregnated ion-exchange membrane layer (24).

## Description

### BACKGROUND

An electrolysis cell is an electro-mechanical assembly that dissociates water to produce hydrogen and oxygen gases. An electrolysis cell typically includes an anode, a cathode and an ion-exchange membrane (also known as a proton-exchange membrane (PEM)). The ion-exchange membrane is positioned between the anode and the cathode. During operation, water is electrolyzed to oxygen gas, hydrogen ions (protons) and electrons at the anode. The hydrogen ions migrate from the anode to the cathode due to an electric field imposed across the ion-exchange membrane, and the electrons are transferred to the cathode through an external circuit by a direct current (DC) power supply. At the cathode, the electrons and the hydrogen ions combine to produce hydrogen gas.

The electrolysis cell consumes water at the anode, and water must be continuously supplied to the anode for continued operation. In one cell design, water is fed directly to the anode. In another cell design, water is fed to the cathode and is transported through the ion-exchange membrane to the anode.

The rate of oxygen generation of an electrolysis cell is governed by Faraday's law in that an increase in cell current provides a corresponding increase in the gas generation rate and consumption of water. To meet production requirements, a cell stack can be formed from a number of electrolysis cells or membrane electrode assemblies (MEAs).

### SUMMARY

An electrolysis cell includes an anode, a cathode and a high-differential-pressure water electrolysis bilayer membrane disposed between the anode and the cathode. The high-differential-pressure water electrolysis bilayer membrane includes a platinum-impregnated ion-exchange membrane layer and an untreated ion-exchange membrane layer. The untreated ion-exchange membrane layer is disposed between the anode and the platinum-impregnated ion-exchange membrane layer.

### BRIEF DESCRIPTION OF THE DRAWINGS

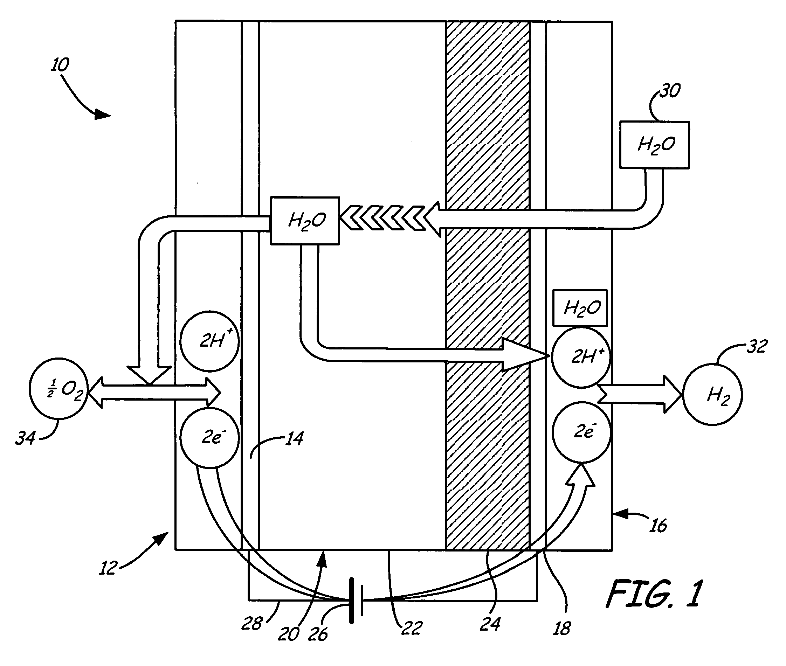

FIG. 1 is a schematic diagram of an electrolysis cell having a bilayer membrane.

### DETAILED DESCRIPTION

High-differential-pressure oxygen generators employing ion-exchange membrane water electrolyzer technology are being considered for recharging the primary oxygen system in next generation space suits. Such high-differential-pressure oxygen generators supplied only with water and electrical power convert water to oxygen on the anode and hydrogen on the cathode. Application requirements dictate that the oxygen is generated at high pressure and hydrogen at low pressure. For example, it is desirable to generate oxygen at pressures up to about 25 MPa (3,600 pounds per square inch (psi)) from water at ambient pressure and without an external compressor.

FIG. 1 is a schematic diagram of an electrolysis cell 10 which includes anode 12 (having anode electrode 14), cathode 16 (having cathode electrode 18), bilayer membrane 20 (having untreated membrane layer 22 and platinum-exchanged membrane layer 24), direct current (DC) power source 26, external circuit 28, water feed line 30, low-pressure hydrogen 32 and high-pressure oxygen 34. Anode 12 is located on one side of electrolysis cell 10, and cathode 16 is located opposite of anode 12. Bilayer membrane 20 is positioned between anode 12 and cathode 16 such that untreated membrane layer 22 is adjacent anode 12 and platinum-exchanged membrane layer 24 is adjacent cathode 16. DC power source 26 is connected to anode electrode 14 and cathode electrode 18 by external circuit 28 and supplies electrical power to electrolysis cell 10. Water feed line 30 supplies liquid water to cathode 16.

During operation, water is introduced into anode 12 where it contacts an anode catalyst and is electrolytically dissociated into hydrogen ions (protons), electrons and oxygen gas according to equation (1).

H₂O → ½ O₂ + 2H⁺ + 2e⁻ (1)

The hydrogen ions migrate from anode 12 through bilayer membrane 20 to cathode 16 under the effect of the electric field imposed across electrolysis cell 10 by DC power source 26. The electrons are transferred through external circuit 28 by DC power source 26. A cathode catalyst of cathode 16 recombines the hydrogen ions and the electrons to produce low-pressure hydrogen 32 according to equation (2).

2H⁺ + 2e⁻ → H₂ (2)

Anode electrode 14 and cathode electrode 18 are hydrophilic. For the electrolysis reactions to occur cathode electrode 18 takes water from a bulk stream and anode electrode 14 absorbs water from membrane 20. Anode electrode 14 is also known as the oxygen electrode because high-pressure oxygen 34 is produced at anode 12, and cathode electrode 18 is also known as the hydrogen electrode because low-pressure hydrogen 32 is produced at cathode 16.

Electrolysis cell 10 is a high-differential-pressure electrolysis cell which produces high-pressure oxygen 34 at anode 12 and low-pressure hydrogen 32 at cathode 16. In one example, oxygen can be produced at pressures of up to about 25 MPa (3,600 pounds per square inch (psi)) from water at ambient pressure. Low-pressure hydrogen 32 is produced at about the same pressure as the water and is typically slightly above ambient pressure in order to overcome the pressure drop of flowing water through cathode 16. In electrolysis cell 10, anode 12 is at a higher pressure than cathode 16, and a pressure differential exists across bilayer membrane 20.

As shown in FIG. 1, water is provided at cathode 16 by water feed line 30. The water moves from cathode 16 through bilayer membrane 20 to anode 12 where it is consumed. As described further below, providing water to cathode 16 reduces the number of components, the overall weight and enhances the reliability of an oxygen generation system employing electrolysis cell 10.

Bilayer membrane 20 improves water transport in electrolysis cell 10 and increases the oxygen generation rate for a given cell stack size. Bilayer membrane 20 is a high-differential-pressure membrane. A support structure enables operation of bilayer membrane 20 at high-differential pressure.

Bilayer membrane 20 includes untreated membrane layer 22 and platinum-exchanged membrane layer 24. Untreated membrane layer 22 and platinum-exchanged membrane layer 24 are in continuous contact with one another. Continuous contact between membrane layers 22 and 24 is important for water transport through bilayer membrane 20 and results in reduced contact resistance. Untreated membrane layer 22 and platinum-exchanged membrane layer 24 can be stacked adjacent to one another as two separate structures. Alternatively, untreated membrane layer 22 and platinum-exchanged membrane layer 24 can be hot-pressed together to form a single structure. Hot-pressing membrane layers 22 and 24 together reduce interfacial resistance between membrane layers 22 and 24 when membrane layers 22 and 24 are dry. Experimental testing has shown that there is no resistance penalty for hot-pressing ion-exchange membrane layers together. In one example, untreated membrane layer 22 and platinum-exchanged membrane layer 24 are hot-pressed together at about 1723 kilopascals (250 psi) and 130 degrees Celsius.

In one example, untreated membrane layer 22 is thicker than platinum-exchanged membrane layer 24. Bilayer membrane 20 has thickness T_{T}, untreated membrane layer 22 has thickness T_{U} and platinum-exchanged membrane layer 24 has thickness T_{P}. In one example, thickness Tᵤ of untreated membrane layer 22 is about 0.18 mm (0.007 inches) and thickness T_{P} of platinum-exchanged membrane layer 24 is about 0.05 mm (0.002 inches). In another example, the ratio of T_{P} to T_{T} is between about 0.002 and about 0.999. In a further example, the ratio of T_{P} to T_{T} is between about 0.002 and about 0.8. In a still further example, the ratio of T_{P} to T_{T} is between about 0.004 and about 0.5.

Untreated membrane layer 22 is located closer to anode 12 than to cathode 16. Untreated membrane layer 22 can be an ion-exchange membrane, such as a Nafion® membrane, a perfluorocarbon ion-exchange membrane produced by E.I. du Pont de Nemours & Co. of Wilmington, Delaware. Membrane layer 22 is referred to as an "untreated membrane layer" because membrane layer 22 has not been treated with platinum particles. However, membrane layer 22 can be subjected to treatments other than impregnation of platinum particles. For example, untreated membrane layer 22 can be a chemically-stabilized membrane, such as a chemically-stabilized Nafion® membrane. A chemically-stabilized membrane does not contain or contains only a small number of unterminated polymer chains and is less susceptible to free-radical attack.

Platinum-exchanged membrane layer 24 is located between untreated membrane layer 22 and cathode 16. Platinum-exchanged membrane layer 24 can be an ion-exchange membrane, such as a perfluorocarbon ion-exchange membrane, impregnated with a platinum catalyst. For example, platinum-exchanged membrane layer 24 can be a platinum-impregnated ion-exchange membrane. An example method of impregnating an ion-exchange membrane with platinum is provided in U.S. Patent No. 5,342,494 by Shane et al., which is herein incorporated by reference. The method includes conditioning the membrane by preferentially exchanging the hydrogen ion of the membrane's acid group with replacement cations which are larger than the hydrogen ions to condition the membrane, contacting the conditioned membrane with solution containing platinum ions such that the platinum ions exchange with the replacement cations, and converting the impregnated platinum ions to their metal form to form a platinum catalyst. The amount of platinum impregnated in the membrane depends on the type of membrane to be impregnated. For example about 0.92 grams of platinum per square meter per mil (gm Pt/m²/mil) (0.086 gm Pt/ft²/mil) can be impregnated into a Nafion® membrane by a single impregnation procedure. Multiple impregnation procedures may be necessary to attain the platinum loading required to produce the desired oxygen purity. In one example, platinum-exchanged membrane layer 24 has a platinum loading of about 4.6 to about 36 mg/cm³ of membrane material (about 75 to about 590 mg/in³ of membrane material).

The platinum of platinum-exchanged membrane layer 24 is dispersed or impregnated throughout membrane layer 24. The platinum of platinum-exchanged membrane layer 24 is configured for catalytic activity. The platinum forms catalyst sites in the platinum-impregnated ion-exchange membrane layer. As described below, the platinum facilitates hydration of bilayer membrane 20 and improves water transport through bilayer membrane 20.

In one example, platinum is impregnated on platinum-exchanged membrane layer 24 before forming bilayer membrane 20. Forming bilayer membrane 20 from separate membrane layers 22 and 24 simplifies production because platinum is impregnated on the entire platinum-exchanged membrane layer 24 and not only on select regions.

The rate of oxygen generation of electrolysis cell 10 is governed by Faraday's law in that an increase in cell current provides a corresponding increase in the gas generation rate and consumption of water. Therefore, increasing the oxygen generation rate increases the consumption of water at anode 12, and in order to maintain an increased oxygen generation rate for a given stack size, anode 12 must be supplied with sufficient water.

In electrolysis cell 10, water is fed to cathode 16 by water feed line 30 and is then transported through bilayer membrane 20 to anode 12. More specifically, the water is transported through platinum-exchanged membrane layer 24 and then untreated membrane layer 22 before reaching anode 12. Feeding water to high-pressure anode 12 necessitates developing a high-pressure oxygen/water phase separator, incorporating a high-pressure water pump in the anode loop and a high-differential-pressure feed pump. These elements add weight, volume and complexity to a complete water electrolysis system. In contrast, feeding water to low-pressure cathode 16 as shown in FIG. 1, reduces the number of components and the overall weight of and enhances the reliability of a water electrolysis system employing electrolysis cell 10.

Continuous operation of electrolysis cell 10 requires water transport from cathode 16 to anode 12 where it is consumed. Several mechanisms in addition to consumption deplete anode 12 of water and inhibit the anode reaction. First, hydrodynamic pressure across membrane 20 depletes anode 12 of water. Water is supplied to anode 12 against the hydrodynamic pressure differential across electrolysis cell 10. The pressure of anode 12 is higher than that of cathode 16, such that the hydrodynamic pressure "pushes" against water moving to anode 12.

Electro-osmotic drag also depletes anode 12 of water. Electro-osmotic drag occurs when protons from anode 12 "drag" water molecules from anode 12 to cathode 16 as they move through membrane 20. For example, proton movement from anode 12 to cathode 16 can drag up to six molecules of water per proton through a Nafion® ion-exchange membrane.

The water vapor of anode 12 is in equilibrium with the water contained within membrane 20. Therefore, as the water vapor leaves anode 12 with the product oxygen, it is replenished with water from membrane 20.

Water transportation from cathode 16 to anode 12 occurs by two primary mechanisms: diffusion and capillary action. Diffusion occurs because the concentration of water on cathode 16 is larger than that of anode 12. In ion-exchange membranes, such as Nafion®, the magnitude of the diffusion constant is a function of the water content of the membrane such that the diffusion rate is lower when the membrane has a lower water content. Therefore, once membrane 20 begins to lose water, it becomes harder to supply water to anode 12.

Capillary action is another water transport mechanism. Capillary action follows the law of Young and Laplace where P_{c} = 4γcos(θ)/d, where P_{c} is the capillary pressure, γ is the surface tension of water, θ is the contact angle and d is the diameter of the capillary. For Nafion® ion-exchange membranes, capillary action occurs because the pores shrink when they dry. This results in a capillary pressure differential between cathode 16 and anode 12.

The platinum of platinum-exchanged membrane layer 24 protects against free-radical attack. Free-radical attack can create pinholes in ion-exchange membranes of water electrolysis cells and can eventually result in cell stack failure. As described further below, the location of platinum in bilayer membrane 20 can be limited to where free-radical attack is most likely to occur and where the most benefit is achieved.

The platinum of platinum-exchanged membrane layer 24 also improves the purity of the oxygen and hydrogen gas produced by electrolysis cell 10. Hydrogen and oxygen diffuse through bilayer membrane 20 due to concentration gradients. For example, hydrogen can diffuse to anode 12 and oxygen can diffuse to cathode 16. This diffusion (also known as cross-diffusion) reduces the hydrogen and oxygen purities. The platinum (or catalyst sites) of platinum-exchanged membrane layer 24 recombines the oxygen and hydrogen cross-diffusing through bilayer membrane 20 to form water. This reduces hydrogen contamination of oxygen produced at anode 12 and oxygen contamination of hydrogen produced at cathode 16. In one example, platinum-exchanged membrane layer 24 provides sufficient sites to produce an oxygen purity of at least 99.5%.

Bilayer membrane 20 improves water transport to anode 12 while producing high-purity products in high-differential-pressure water electrolysis cell 10. Anode 12 can oxidize platinum metal. Locating platinum-exchanged membrane layer 24 closest to cathode 16 minimizes oxidization of the platinum metal by anode 12.

Platinum also increases the pore diameter of ion-exchange membranes. Ion-exchange membranes such as Nafion® comprise a plurality of nano-sized pores which transport water from one side of electrolysis cell 10 to the other. Using platinum-exchanged membrane layer 24 alone would result in a reduced capillary pressure, which would hinder water transport against the high-differential pressure and reduce hydrogen and oxygen generation. By increasing the pore diameter of only a select portion (i.e. platinum-exchanged membrane layer 24) of bilayer membrane 20, the reduced capillary action is limited. In bilayer membrane 20, the larger pores of platinum-exchanged membrane layer 24 enhance diffusion of water through layer 24 while the small pores of untreated membrane layer 22 facilitate improved water transport to anode 12 against the pressure gradient. The small pores of untreated membrane layer 22 improve the capillary pressure towards anode 12 and increase the limiting current. Thus, bilayer membrane 20 improves water transport to anode 12 and results in increased oxygen production at the same stack mass and volume.

Additionally, the pore size of membrane layers 22 and 24 affects the oxygen purity. The small pores of untreated membrane layer 22 limit the amount of gas crossover or cross-diffusion in water electrolysis cell 10. Increasing the pore size of membrane layers 22 and 24 reduces the resistance to cross-diffusing gases. It is particularly important that oxygen has resistance to transport when the oxygen pressure is much greater than that of hydrogen.

Operation of electrolysis cell 10 can cause degradation to ion-exchange membranes, for example from free-radical attack. Membrane degradation is typically most severe in a plane parallel and adjacent to cathode 16. The thickness of this plane is approximated by the product of thickness T_{T} of bilayer membrane 20 and PH₂/(PH₂+PO₂), where PH₂ is the partial pressure of hydrogen and PO₂ is the partial pressure of oxygen. In high-differential-pressure electrolysis cell 10, the partial pressure of oxygen is much higher than the partial pressure of hydrogen. Thus, a very thin plane adjacent to the cathode will experience the most severe degradation. In electrolysis cell 10, the plane that is predicted to experience the most severe degradation and free-radical attack can be protected by the platinum of platinum-exchanged membrane layer 24. Platinum-exchanged membrane layer 24 can be designed to encompass the calculated plane. The membrane experiences little degradation outside of this plane, such that untreated membrane layer 22 does not experience significant degradation despite not being protected by platinum.

During operation of electrolysis cell 10, protons from anode 12 are transferred through bilayer membrane 20 to cathode 16. The protons are transferred through bilayer membrane 20 in their hydrated form. This reduces the water transfer rate through bilayer membrane 20 and results in limited current density due to the limited water availability at anode 12. Bilayer membrane 20 increases water transport in electrolysis cell 10, resulting in a larger limited current density and increased oxygen generation for a given stack size.

While the invention has been described with reference to an exemplary embodiment(s), it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An electrolysis cell comprising:
an anode (12);
a cathode (16); and
a high-differential-pressure water electrolysis bilayer membrane (20) disposed
between the anode and the cathode, the high-differential-pressure water electrolysis bilayer membrane (20) comprising:
a platinum-impregnated ion-exchange membrane layer (24); and
an untreated ion-exchange membrane layer (22) disposed between the
anode and the platinum-impregnated ion-exchange membrane layer (24).

2. The electrolysis cell of claim 1, wherein the untreated ion-exchange membrane layer (22) is thicker than the platinum-impregnated ion-exchange membrane layer (24).

3. The electrolysis cell of claim 1 or 2, wherein a ratio of the platinum-impregnated ion-exchange membrane layer (24) thickness to the high-differential-pressure water electrolysis bilayer membrane (20) thickness is between 0.002 to 0.999, and preferably wherein the ratio of the platinum-impregnated ion-exchange membrane layer (24) thickness to the high-differential-pressure water electrolysis bilayer membrane (20) thickness is between 0.002 and 0.8

4. The electrolysis cell of claim 3, wherein the ratio of the platinum-impregnated ion-exchange membrane layer (24) thickness to the high-differential-pressure water electrolysis bilayer membrane (20) thickness is between 0.004 and 0.5.

5. The electrolysis cell of any preceding claim, wherein the platinum-impregnated ion-exchange membrane layer (24) and the untreated ion-exchange membrane layer (22) are hot-pressed together to form a single structure.

6. The electrolysis cell of any of claims 1 to 5, wherein the platinum-impregnated ion-exchange membrane layer (24) and the untreated ion-exchange membrane layer (22) are separate structures in the bilayer ion-exchange membrane.

7. The electrolysis cell of any preceding claim, wherein the untreated ion-exchange membrane layer (22) is a chemically-stabilized perfluorocarbon ion-exchange membrane.

8. The electrolysis cell of any preceding claim, wherein the electrolysis cell is a high-differential-pressure water electrolysis cell that generates oxygen at a pressure up to 25 MPa.

9. The electrolysis cell of any preceding claim, and further comprising:
a water feed line (30) connected to the cathode.

10. A system for producing high-purity oxygen, the system comprising an electrolysis cell as claimed in any preceding claim wherein:
the anode (12) is an oxygen anode for producing hydrogen ions, oxygen gas and
electrons;
the cathode (16) is a hydrogen cathode for producing hydrogen gas.

11. A method for producing high-purity oxygen, the method comprising:
feeding water to a cathode (16) of a high-differential-pressure electrolysis cell, the
high-differential-pressure cell comprising an anode (12) and a bilayer membrane (20) disposed between the anode and the cathode, the bilayer membrane including a platinum-impregnated ion-exchange membrane layer (24) and an untreated ion-exchange membrane layer (22), wherein the platinum-impregnated ion-exchange membrane layer is impregnated with platinum which forms catalyst sites in the platinum-impregnated ion-exchange membrane layer;
transporting water from the cathode to the anode across the platinum-impregnated
ion-exchange membrane layer and then across the untreated ion-exchange membrane layer;
electrolyzing the water in the anode to produce hydrogen ions, oxygen gas and
electrons;
passing the electrons through an exterior circuit to the cathode;
passing the hydrogen ions through the untreated ion-exchange membrane layer
and then through the platinum-impregnated ion-exchange membrane layer to the cathode;
combining the hydrogen ions and the electrons to form hydrogen gas in the
cathode; and
recombining cross-diffusing hydrogen gas of the cathode and oxygen gas of the
anode at the catalyst sites of the platinum-impregnated ion-exchange membrane.

12. The method of claim 11, wherein the anode (12) is configured to operate at pressures up to 25 MPa.

13. The method of claim 11 or 12, wherein the platinum-impregnated ion-exchange membrane layer (24) and the untreated ion-exchange membrane layer (22) are hot-pressed together to form a single structure.

14. The method of claim 11, 12 or 13, wherein a ratio of a thickness of the platinum-impregnated ion-exchange membrane layer (24) to a thickness of the bilayer membrane (20) is between 0.002 and 0.999, preferably wherein the ratio of the thickness of the platinum-impregnated ion-exchange membrane layer (24) to the thickness of the bilayer membrane (20) is between 0.002 and 0.8, more preferably wherein the ratio of the thickness of the platinum-impregnated ion-exchange membrane layer (24) to the thickness of the bilayer membrane (20) is between 0.004 and 0.5.

15. The method of claim 11, wherein the platinum-impregnated ion-exchange membrane layer (24) is adjacent the cathode (16) and the untreated ion-exchange membrane layer (22) is adjacent the anode (12).
